# EUROPEAN PATENT SPECIFICATION

(11) **EP 2 740 714 B1**
(45) Date of publication and mention of the grant of the patent: **23.11.2016**
(21) Application number: 13195458.8
(22) Date of filing: 03.12.2013
(51) Int. Cl.: C02F 11/08, B09B 3/00, B01J 3/00, C02F 1/02, D21C 11/14, C02F 1/72, C02F 1/74, C02F 1/78, C02F 1/20, C02F 1/44, C02F 101/16, C02F 101/30, C02F 103/28, C02F 103/36

(54) **USE OF A FLUID PURIFICATION SYSTEM**
VERWENDUNG DES FLÜSSIGKEITSREINIGUNGSSYSTEMS
UTILISATION DE SYSTÈME DE PURIFICATION DE FLUIDE

(30) Priority: 04.12.2012 JP 2012265579; 30.08.2013 JP 2013179159
(43) Date of publication of application: 11.06.2014
(73) Proprietor: Ricoh Company, Ltd., Tokyo 143-8555 (JP)
(72) Inventor: Aoki, Kimio, Tokyo, 143-8555 (JP); Suzuki, Shogo, Tokyo, 143-8555 (JP); Mutoh, Toshiyuki, Tokyo, 143-8555 (JP); Miyazawa, Hideyuki, Tokyo, 143-8555 (JP); Nakashima, Makito, Tokyo, 143-8555 (JP); Utsuki, Aya, Tokyo, 143-8555 (JP); Hayakawa, Kenichi, Tokyo, 143-8555 (JP); Zama, Yu, Tokyo, 143-8555 (JP); Yamada, Shigeru, Tokyo, 143-8555 (JP)
(74) Representative: Schwabe - Sandmair - Marx

(56) References cited:
- WO-A1-99/64112
- WO-A1-2009/015409
- JP-A- H07 108 282
- JP-A- 2011 121 052
- US-A- 4 543 190
- US-A- 4 714 032
- US-A- 4 898 107
- US-A1- 2010 254 872

## Description

### Field of the Invention

The present invention relates to using a fluid purification system including a reaction tank which purifies a purification target fluid by decomposing an organic substance in the purification target fluid with an oxidation reaction while heating and pressurizing a mixed fluid of the purification target fluid and oxidant.

### Description of the Related Art

A method of performing a biotreatment using active sludge is generally used as a method of purifying organic wastewater such as human waste, sewage, community sewage, livestock excreta, or wastewater from food factories. However, this method cannot treat high concentration organic solvent wastewater, which disturbs the activity of microorganism in active sludge, at an unchanged concentration or cannot treat wastewater containing non-biodegradable plastic fine particles. The method also cannot treat wastewater containing a lot of persistent organic substances such as oil having a slow decomposition speed by microorganisms.

On the other hand, in recent years, a wastewater purification device which purifies wastewater by oxidatively decomposing an organic substance in wastewater while heating and pressurizing the wastewater and oxidant such as air has been developed. The device described in Patent Document 1, for example, is a known wastewater purification device. This wastewater purification device is configured to heat and pressurize wastewater and air in a reaction tank, so as to change the water in the wastewater into supercritical water. The supercritical water is water in a condition having a property between liquid and gas. Such a condition occurs when a temperature exceeds a critical temperature of water and pressure exceeds critical pressure of water. The organic substance is oxidatively decomposed in a moment in the supercritical water in the reaction tank.

A wastewater purification device which oxidatively decomposes an organic substance in wastewater by mixing wastewater as subcritical water and air instead of changing the wastewater into supercritical water is also known. The subcritical water is in a condition having a property closer to liquid than supercritical water, and is obtained by heating water while pressurizing the water with pressure lower than the critical pressure. The organic substance can be oxidatively decomposed in a moment by changing the wastewater into the subcritical water in a reaction tank.

With the configuration which oxidatively decomposes an organic substance in wastewater by changing the wastewater and air into a supercritical or subcritical condition under a high temperature and high pressure, a high concentration organic solvent wastewater which cannot be purified by a biotreatment can be preferably purified. Wastewater containing plastic fine particles, wastewater containing persistent organic substances or the like can be also preferably purified.

However, the running cost of such a configuration is high because it consumes a lot of energy for increasing the temperature of the wastewater in the reaction tank to be close to the reaction temperature by a heater.

### SUMMARY

The present inventors found through experiments that an organic substance can be preferably oxidatively decomposed by changing wastewater or organic solvent in a reaction tank into an overheated steam condition with heating and pressurizing. However, when the wastewater, organic solvent or the like is purified as just described, the running cost is increased because such a configuration consumes a lot of energy for heating.

The present invention has been made in view of the above circumstances, and an object of the present invention is to provide a fluid purification system which can reduce a running cost for heating a purification target fluid such as wastewater or organic solvent.

In order to achieve the above object, a fluid purification system, includes: a reaction tank which purifies a purification target fluid by decomposing an organic substance in a purification target fluid with an oxidation reaction while heating and pressurizing a mixed fluid of the purification target fluid and an oxidant; a crusher which crushes an organic solid waste so as to obtain an organic crushed product; a mixer which mixes the organic crushed product and liquid so as to obtain high concentration organic slurry; and a mixing pump which mixes the purification target fluid with the high concentration organic slurry, so as to be pumped to the reaction tank or a slurry pump which pumps the high concentration organic slurry to the reaction tank separately from the purification target fluid.

Relevant prior art includes US 4 898 107, US 2010/254872, US 4 543 190, WO 2009/015409.

### BRIEF DESCRIPTION OF THE DRAWINGS

The accompanying drawings are included to provide further understanding of the invention, and are incorporated in and constitute a part of this specification. The drawings illustrate embodiments of the invention and, together with the specification, serve to explain the principle of the invention.

FIG. 1 is a longitudinal sectional view illustrating a reaction tank of a fluid purification system according to an embodiment.
FIG. 2 is an exploded longitudinal sectional view illustrating the reaction tank.
FIG. 3 is a view illustrating a planetary ball mill.
FIG. 4 is a view illustrating an inside of a crushing pot of the planetary ball mill.
FIG. 5 is a schematic view illustrating a rotary cutter mill.
FIG. 6 is a schematic view illustrating a fluid purification system according to First Embodiment.
FIG. 7 is a schematic view illustrating a fluid purification system according to Third Embodiment.

### DETAILED DESCRIPTION OF THE PREFERRED EMBODIMENTS

Hereinafter, one embodiment of a use of a fluid purification system according to the present invention will be described.

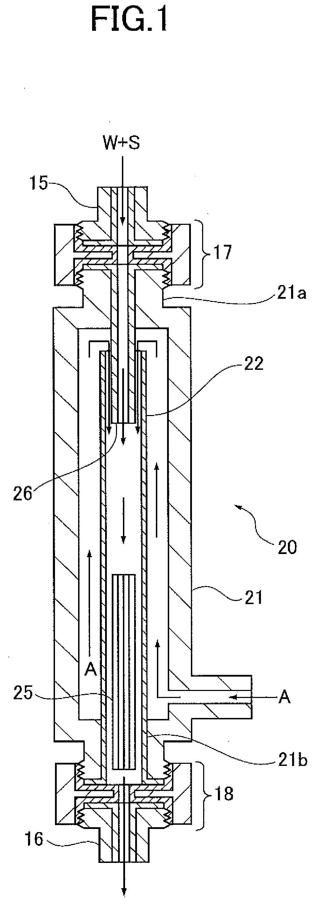

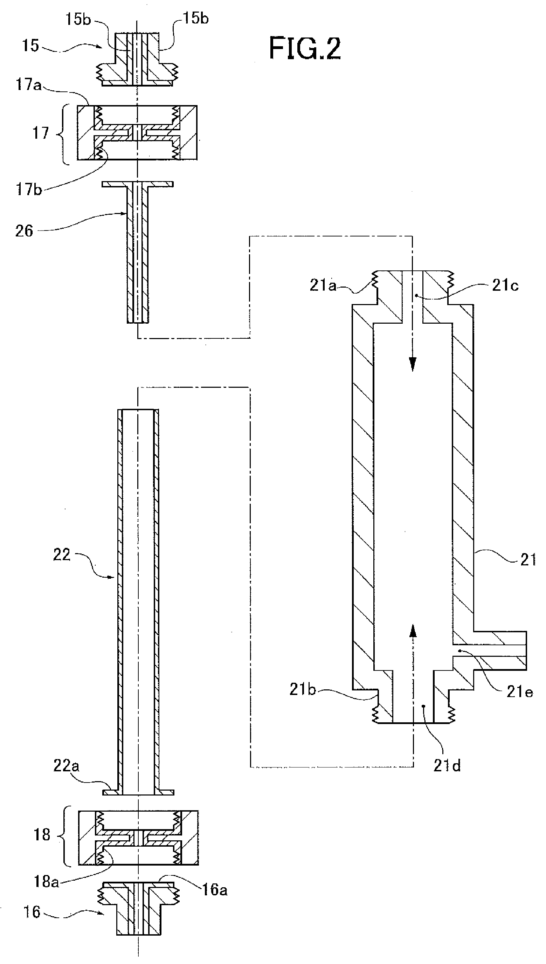

At first, a basic configuration of a fluid purification system will be described. FIG. 1 is a longitudinal sectional view illustrating a reaction tank 20 of a fluid purification system according to the embodiment. FIG. 2 is an exploded longitudinal sectional view of the reaction tank 20. An inner tube 22 is a tube made of titanium (Ti) having resistance to acid. A tube made of Ta, Au, Pt, Ir, Rh, or Pd can be used instead of the tube made of titanium. A tube made of alloy containing at least one of Ti, Ta, Au, Pt, Ir, Rh, and Pd can be used.

An outer tube 21 is a tube made of a metal material having prominent strength such as stainless steel (SUS304, SUS316) or inconel 625. The pressure of the inside of the reaction tank 20 is controlled to a high pressure of 0.5-30 MPa, preferably, 5-30 MPa. The outer tube 21 has a high-pressure resistance thickness in order to withstand such a high pressure. In contrast, the inner tube 22 is made of a titanium material having prominent corrosion resistance because the inner tube 22 is required to have corrosion resistance.

The mixed water of high concentration organic slurry S and wastewater W pumped to the reaction tank 20 with a not-shown raw water supply pump enters a raw water delivery tube 15. The raw water delivery tube 15 is connected to a flow tube 26 inserted on the entrance side of the reaction tank 20 with an entrance joint 17. The wastewater W and the high concentration organic slurry S delivered to the reaction tank 20 from the raw water delivery tube 15 flow in the inner tube 22 through the flow tube 26. Then, the wastewater W and slurry S move within the inner tube 22 downwardly along the longitudinal direction.

On the other hand, air A pumped in the reaction tank 20 with a not-shown raw water supply pump flows in a space between the outer tube 21 and the inner tube 22. The air A then moves within the space between the tubes upwardly along the longitudinal direction. The inner tube 22 includes in the upper end thereof a slot having a diameter substantially similar to the inner diameter of the tube and the central line of the tube cross-sectional surface as a center. A leading end portion of the flow tube 26 which introduces the wastewater W and high concentration organic slurry S in the inner tube 22 is inserted in the inner tube 22 through the slot. The outer diameter of the leading end portion of the flow tube 26 is slightly smaller than the inner diameter of the inner tube 22, so that a space is formed between the outer circumferential surface of the flow tube 26 and the inner circumferential surface of the inner tube 22 in the inner tube 22. The air A moved to the upper end within the space between the outer tube 21 and the inner tube 22 enters the inner tube 22 through the space while moving around the upper side of the inner tube 22.

The inside of the inner tube 22 is at a high pressure and a high temperature. The temperature is 100-700 °C, preferably, 200-550 °C. At the start of the driving of the fluid purification system, the mixed fluid of the wastewater W, high concentration organic slurry S, and air A in the inner tube 22 is pressurized, but its temperature is not very high. At the start of the driving, therefore, an after-described programmable sequencer heats a heater covering the outer circumferential surface of the outer tube 21, and increases the temperature of the mixed fluid in the inner tube 22 to 200-550 °C.

Upon the increase in the temperature of the mixed fluid in the inner tube 22, the oxidative decomposition of the organic substance starts in the inner tube 22. The air A, which moves upwardly while having contact with the inner circumferential surface of the outer tube 21 and the outer circumferential surface of the inner tube 22 within the space between the inner tube 22 and the outer tube 21, is previously heated by heat conduction from the outer circumferential surface of the inner tube 22 and the inner circumferential surface of the outer tube 21.

Hydrochloric acid derived from a chloro group of organochlaride or vitriol derived from a sulfonyl group such as an amino acid is generated in the inner tube 22, so as to provide a strong acidic property in the inner wall of the inner tube 22. A tube made of titanium having a prominent corrosion resistance is therefore adopted for the inner tube 22. However, titanium is a very expensive material, so that the cost is significantly increased if the thickness of the inner tube 22 is increased to have high-pressure resistance. For this reason, the outer tube 21 is disposed outside the inner tube 22 such that the outer tube 21 made of stainless steel or the like at a price lower than that of titanium obtains required pressure resistance. The pressure in the space between the inner tube 22 and the outer tube 21 has a value substantially equal to that of the pressure in the inner tube 22 by the pumped air A, so that large pressure is not applied to the inner tube 22 made of thin titanium.

A honeycombed structure catalyst 25 is disposed in the region on the downstream side (region on lower end side) in the fluid delivery direction in the entire region of the inner tube 22 in the longitudinal direction in a posture such that a plurality of tubular spaces is arranged along the tube axis line direction of the inner tube 22. This catalyst 25 is made of a material which promotes the oxidative decomposition of the ammonia nitrogen or the organic substance contained in the wastewater W and the high concentration organic slurry S. The material includes Ru, Pd, Rh, Pt, Au, Ir, Os, Fe, Cu, Zn, Ni, Co, Ce, Ti, or Mn. The material can be a compound containing at least one of these.

Most of the organic substance contained in the wastewater W or the high concentration organic slurry S is oxidatively decomposed in the front region of the inner tube 22 in the longitudinal direction, but the oxidative decomposition of the ammonia nitrogen or the organic substance which is not oxidatively decomposed even after passing through the front region is promoted by the catalyst 25. With this configuration, even when a persistent organic substance is contained in the wastewater W, it can be preferably oxidatively decomposed. Even when large amounts of ammonia nitrogen are contained in the wastewater W, it can be also easily oxidatively decomposed.

The organic substance or inorganic compound of the mixed fluid (W + S + A) in the lower end portion of the inner tube 22 is almost totally oxidatively decomposed. A purified fluid delivery tube 16 is connected to the lower end portion in the inner tube 22 through an exit joint 18. The mixed fluid purified by the oxidative decomposition of the organic substance enters the purified fluid delivery tube 16.

The range of 0.5-30 MPa (preferably, 5-30 MPa) can be used as an example of the pressure to be applied to the mixed fluid in the inner tube 22. The pressure in the inner tube 22 is adjusted by a not-shown exit valve connected to the purified fluid delivery tube 16. The exit valve automatically opens when the pressure in the inner tube 22 becomes higher than a threshold, so as to discharge outside the mixed fluid in the inner tube 22. The pressure in the inner tube 22 is maintained in a predetermined range.

The range of 100-700 °C (preferably, 200-550 °C) is an example of the temperature of the mixed fluid in the inner tube 22. The temperature is adjusted by turning on or off the above-described heater.

When adopting a temperature of 374.2 °C or more and a pressure of 22.1 MPa or more as the conditions of the temperature and pressure, the temperature and the pressure exceed the critical temperature and the critical pressure of water, respectively, and also exceed the critical temperature and the critical pressure of air, respectively, in the inner tube 22. The mixed fluid therefore becomes a super critical fluid having an intermediate property between liquid and gas. In the supercritical fluid, the organic substance is preferably solved, and preferably has contact with air, so that the oxidative decomposition of the organic substance rapidly progresses.

The wastewater in the mixed fluid in the inner tube 22 can be superheated steam by adopting a temperature of 200 °C or more (preferably, 374. 3 °C or more) and a relatively high pressure of less than 22.1 MPa (preferably, 10 MPa or more) as the conditions of the temperature and pressure.

The oxidative decomposition of the organic substance and the ammonia nitrogen in the mixed fluid progresses with the high temperature and pressure mixed fluid in the inner tube 22. The mixed fluid of which the organic substance and the ammonia nitrogen are oxidatively decomposed is discharged from the reaction tank 20.

The high concentration organic slurry S which is fed in the reaction tank 20 has an organic solid waste as a raw material. The fluid purification system according to the invention includes a crusher, which crushes the organic solid waste while mixing with the liquid so as to obtain the high concentration organic slurry. The high concentration organic slurry S obtained by the crusher is mixed with the wastewater W, and the mixture is pumped to the reaction tank 20. In order to accomplish the pumping, the fluid purification system according to the invention includes a mixing pump, which mixes the wastewater W and the high concentration organic slurry S, and pumps the mixture to the reaction tank 20, or a slurry pump, which pumps the high concentration organic slurry S to the flow tube 26 separately from the wastewater W.

The high concentration organic slurry S fed to the reaction tank 20 produces heat according to the oxidative decomposition in the reaction tank 20, and heats the wastewater W and the air A in the reaction tank. By converting the high concentration organic slurry S made from the organic solid waste into heat energy in the reaction tank 20, the heating amount of the reaction tank 20 by a heater is reduced compared to a case in which the high concentration organic slurry S is not fed to the reaction tank 20. The running cost for heating the mixed fluid can be thereby reduced.

The present inventors focused on used thermal paper as the organic solid waste which becomes the raw material of the high concentration organic slurry S. The thermal paper in which a thermal layer containing fine particle basic colorless dye, coloring agent, sensitizer, inorganic pigment or the like is laminated on the surface of the raw material is advantageous in recording an image without using ink or toner, and is disadvantageous in being difficult to reuse. According to the quality standard specified in Paper Recycling Promotion Center, the thermal paper is classified into a contraindicated product B, and it is not preferable that it is mixed with a papermaking material. The used thermal paper was therefore not reused for manufacturing recycled paper. It was generally burned, and was rarely recycled. It becomes possible to effectively use resources by using the thermal paper which has been conventionally burned as the raw material of the high concentration organic slurry S.

The temperature of the mixed fluid in the inner tube 22 is also increased by the heat generation according to the oxidative decomposition of the organic substance in addition to an increase in temperature by the heating with a heater. When many organic substances are fed in the inner tube 22, the temperature of the mixed fluid is sometimes increased to a desired temperature only by the large amounts of heat generation in the oxidative decomposition of many organic substances. In this case, the heating with a heater is performed only when starting up the system, and the heater can be turned off after the start of the oxidative decomposition.

When purifying the wastewater W having a relatively low organic substance concentration, it is necessary to feed very high concentration organic slurry to the reaction tank 20 in order to increase the temperature of the mixed fluid to a desired temperature only by the heat generated from the oxidative decomposition of the organic substance after the use of the heater only in the starting up. When using paper as a raw material, it is considered that it is necessary for the concentration of the paper in the high concentration organic slurry to be at least about 4 [wt%] at lowest.

The present inventors carried out an experiment which finely crushes the shredder residue with a crusher, and manufactures the high concentration organic slurry S containing paper at a concentration of 4 [wt%].

At first, Experiment 1 was carried out. In particular, the printed thermal paper was shredded with a shredder to be strips of about 3 × 8 [mm]. The fibers of the thermal paper were fibrillated by using a beater for generally use in a paper-making process while mixing the strips and pure water, so that the high concentration organic slurry of 4 [wt%] was obtained. This high concentration organic slurry was put in one-liter measuring cylinder, and the slurry was left for a while. Then, the fibers of the paper were deposited in the bottom of the measuring cylinder. The measuring cylinder was vigorously shaken by a hand in order to diffuse the deposited fibers of the paper. However, the fibers were not at all diffused, and remained as a deposit in the bottom. Upon placing the measuring cylinder upside down, only the water spilled over, and the fibers remained in a stack on the bottom of the measuring cylinder, so as to be strongly agglomerated as cotton. According to the observation of the fibers through a microscope, the fibers having a length of 800-900 [µm] were complexly locked. More specifically, each of the fibers was divided to have a length about 800-900 [µm], but these were complexly locked, so that one large cotton block was formed. The complexly locked fibers could not be unraveled although they were vigorously shaken, remaining in the cotton block.

The high concentration organic slurry containing such a cotton block cannot be pumped. More specifically, the paper fiber cotton block is stacked in the tube on the suction side of the slurry pump, so that the paper fiber cotton block does not move. Thus, it cannot be sucked by the slurry pump. For this reason, the high concentration organic slurry cannot be used for the fluid purification system of the embodiment since it cannot be pumped to the reaction tank 20.

The present inventors therefore carried out Experiment 2. More specifically, the strips (thermal paper) shredded to be about 3 × 8 [mm] with a shredder were crushed by Wonder Blender made by OSAKA CHEMICAL Co., Ltd., and cotton crushed products were obtained. As a result of the observation of the crushed products through a microscope, the length of the observed fiber did not significantly differ from that in Experiment 1. However, particles from products of which the fibers could be cut were adhered onto the lid of Wonder Blender. After carrying out IR analysis of the product, the main component was cellulose. For this reason, it became clear that a part of the paper fibers was finely cut into particles. The high concentration organic slurry containing the crushed products at a concentration of 4 [wt%] was manufactured. However, similar to Experiment 1, the agglomerated fiber cotton block was adhered onto the bottom of the measuring cylinder similar to Experiment 1.

Next, Experiment 3 was carried out. More specifically, pure water was added into crushed products obtained by crushing strips with Wonder Blender made by OSAKA CHEMICAL Co., Ltd., and the water and the crushed products were agitated. A further crushing process of crushed products was carried out under a condition of Rotor R1, Screen S2. 0-24, 15000 [rpm] for 5 minutes with Clearmix made by MTECHNIQUE, but the fibers in the crushed product were not further shredded. A similar crushing process was carried out by adding PVA in order to improve a shearing force by increased viscosity, but the fibers were not further shredded.

Next, Experiment 4 was carried out. More specifically, strips about 3 × 8 [mm] were obtained by shredding paper with Magic Lab Shredder made by IKA, Co., Ltd. A crushing process was performed on the strips under a condition of 15000-20000 [rpm] and one blade and two blades with Magic Lab made by IKA, Co., Ltd. In particular, 40 g of strips was gradually put in 960 g of pure water, and a crushing process was completed after about 60 minutes. After observing the obtained 4 [wt%] of slurry through a microscope, the fibers having a length of 800-900 [µm] were observed similar to the fibrillated fibers with a beater. These fibers were complexly locked to form one block. It was clear that pumping was not possible similar to Experiment 1.

As described above, even after repeated trial and error, the present inventors could not obtain a good result and were about to give up using paper as the raw material of the high concentration organic slurry. However, the present inventors could finally obtain a good result using a crusher, a so-called planetary ball mill. More particular, the following Experiment 5 was carried out. Namely, a planetary ball mill was prepared as a crusher. The configurations of the planetary ball mill will be described later. Regular paper was shredded into strips having a size of about 3 × 8 [mm] with a shredder. As a crushing pot of a planetary ball mill, a pot having a capacity of 250 ml and made of zirconia was prepared. The crushing pot was set on a rotation base of the planetary ball mill after putting 10 g of strips and six balls of 25 mm in diameter in the crushing pot, and sealing the pot. Then, a crushing process was carried out for 10 minutes at 320 [rpm]. After taking out the crushed product from the crushing pot, and visually confirming the crushed product, the fibers were not yet significantly crushed, but they were shredded so that a decrease in leveling could be confirmed at one view. In order to further shred the fibers, 50 zirconia balls of 10 [mm] in diameter were put in the above-described crushing pot. A crushing process was carried out for 10 minutes at 400 [rpm]. Thereafter, the crushed product was taken out from the crushing pot, and was visibly confirmed. As a result, the fibers were atomized, but a chip which was not crushed was confirmed. A crushing process was further carried out for 10 minutes at 400 [rpm]. Then, the crushed products, balls, and uncrushed fibers were separated by using a screen. Comparing with the crushed product obtained by the crushing process only for 10 minutes, it was obvious that the crushed product was further shredded. After measuring the length distribution of the powder crushed products through a microscope, the center of the distribution was about 21 [µm]. The crushed products were mixed with water at a concentration of 4 [wt%]. The mixed products were put in the measuring cylinder, and were left for a while. After confirming the deposition of the crushed products in the bottom of the measuring cylinder, the measuring cylinder was shaken, so that the deposited crushed products were preferably dispersed in supernatant water. The respective fibers were locked at a predetermined size, but the size of the aggregation of the fibers formed by the locking was about several hundred µpm] in diameter, and each of the fiber aggregations each of several hundred [µm] in diameter was preferably dispersed in water, which was apparently different from the crushed products in Experiments 1-4 forming one large cotton block.

When the high concentration organic slurry having preferable diffuseness of fibers is obtained as just described, the tube on the suction side or the discharge side of the slurry pump is not closed by the cotton block, so that the slurry can be pumped. In order to effectively crush the fibers of paper, it is preferable to continue a crushing process after removing the uncrushed fibers by screening after the crushing process for a predetermined period of time.

Next, Experiments 6, 7 were carried out in order to confirm the effectiveness of the planetary ball mill. In Experiment 6, a stainless-steel pot having a 125 [ml] capacity was prepared as a crushing pot. After sealing the crushing pot in which 10 g of strips and six balls of 20 [mm] in diameter were put, the crushing pot was set on the rotation base of the planetary ball mill. After a crushing process was carried out for 30 minutes at 400 [rpm], the crushed products removed from the crushing pot were screened. After examining the length distribution of the fibers in the crushed products after the separation, all of the fibers were crushed into a length of 100 [µm] or below. The central value of the distribution was about 35 [µm]. The crushed products were mixed with water at a concentration of 4 [wt%]. The mixed products were put in the measuring cylinder, and were left for a while. After confirming the deposition of the crushed products in the bottom of the measuring cylinder, the measuring cylinder was shaken, so that the deposited crushed products were preferably dispersed in the supernatant water.

In Experiment 7, a zirconia crushing pot having a capacity of 250 [ml] was prepared. After sealing the crushing pot in which the 10 g of strips and six zirconia balls of 20 [mm] in diameter were put, the crushing pot was set on a rotation base of the planetary ball mill. After a crushing process was carried out for 25 minutes at 400 [rpm], the crushed products removed from the crushing pot were screened. After examining a length distribution of the fibers in the crushed products after the separation, all of the fibers were crushed into 100 [µm] in length or below, and the central value of the distribution was about 39 [µm]. The crushed products were mixed with water at a concentration of 4 [wt%]. The mixed products were put in the measuring cylinder, and left for a while. After confirming the deposition of the crushed products in the bottom of the measuring cylinder, the measuring cylinder was shaken, so that the deposited crushed products could be preferably dispersed in the supernatant water.

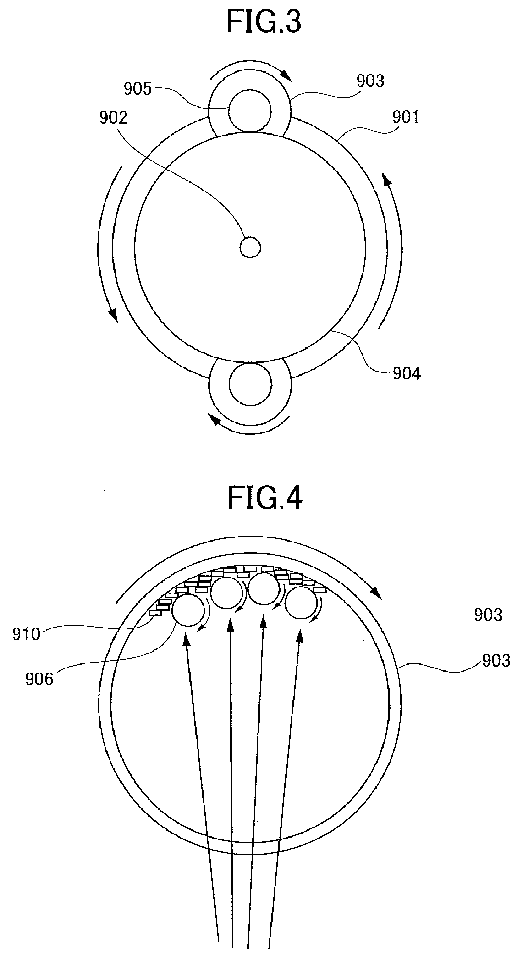

The planetary ball mill includes a rotation base 901, which drives and rotates about a rotation shaft 902, and a crushing pot 903 rotatably held in the rotation base 901 near the outer edge of the rotation base 901 in the radial direction as illustrated in FIG. 3, for example. A large gear 904 is fixed to the rotation shaft 902, and rotates about the rotation shaft 902 together with the rotation base 901. On the other hand, the crushing pot 903 rotatably held in the rotation base 901 includes a not-shown rotation shaft. A pot gear 905 is fixed to the rotation shaft of the crushing pot 903, and engages with the large gear 904.

Upon the rotation of the rotation base 901, the crushing pot 903 revolves about the rotation shaft 902 of the rotation base 901. The crushing pot 903 rotates about a rotation shaft by the engagement of the pot gear 905 and the gear 902 of the rotation base 901. The crushing pot 903 rotates about the rotation shaft while revolving about the rotation shaft 902.

A crushing target 910 and a ball 906 are housed in the crushing pot 903 as illustrated in FIG. 4. A roughening process is performed on the inner circumferential surface of the crushing pot 903. Upon the revolution and rotation of the crushing pot 903 in response to the driving of the planetary ball mill, a centrifugal force by the revolution acts on the crushing target 910 and the ball 906 in the crushing pot 903 as illustrated by the straight arrows in the figure. Therefore, the ball 906 is strongly pressed to the crushing target 910 while the crushing target 910 is pressed to the inner circumferential surface of the crushing pot 903. The ball 906 rotates in the arrow direction according to the rotation of the crushing pot 903. The crushing target 910 is thereby strongly rubbed against the inner circumferential surface of the crushing pot 903, and the crushing target 910 is thereby crushed.

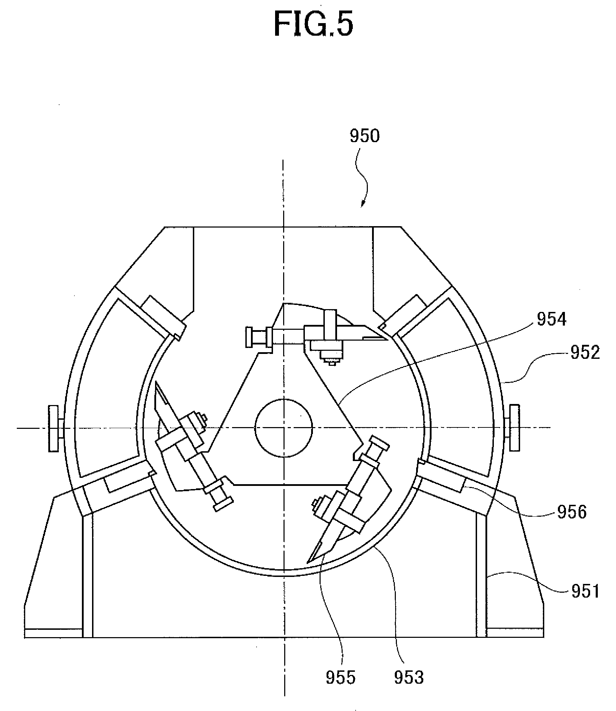

Next, the present inventors studied the effectiveness of the rotary cutter mill as a crusher having a configuration different from that of the planetary ball mill (not part of the present invention). FIG. 5 is a schematic view illustrating the rotary cutter mill. The rotary cutter mill 905 includes a casing 951, casing door 952, screen 953, rotor 954, rotation blade 955, and fixed blade 956. Three rotation blades 955 each revolving in a position having 120 [°] of a phase difference about the rotation axis are fixed to the rotor 954. Four fixed blades 956 are fixed inside the rotary cutter mill 950. The blade edges of these fixed blades 956 are located near the revolution orbit of the blade edges of the rotation blades 955.

The raw material to be crushed which is fed from a not-shown slot is introduced inside the rotary cutter mill 950 through the opening provided in the upper portion of the rotor 954, and cut between the revolving rotation blade 955 and the fixed blade 956. The screen 953 is disposed below the rotor 954, and the air inside the rotary cutter mill 950 is sucked outside with a not-shown suction device through a mesh of the screen 953. A part of the piece cut between the rotation blade 955 and the fixed blade 956, which is shredded to be smaller than the mesh of the screen 953, is only discharged outside through the mesh.

A plate blade is used as the rotation blade 955 and the fixed blade 956, and has a feature which can be easily exchanged, re-polished, and fine-adjusted. In

FIG. 5, only one screen 953 is illustrated, but a plurality of screens 953 each having a different mesh diameter can be overlapped at predetermined intervals. A crushing raw material larger than the opening is previously cut or is set to a size which can pass through the opening by, for example, folding. In addition, when using paper as the crushing raw material, one to five sheets can be put at one time, but it is preferable to dispose the sheets in a quantitative manner with predetermined accuracy in order to make uniform the size of the cut piece.

The present inventors carried out Experiments 8, 9 in order to confirm the effectiveness of the rotary cutter mill. In Experiment 8, the paper was cut into a size of about 200 × 2000 [mm], and the screen 953 of 1 [mm] in a mesh diameter was set in the rotary cutter mill 950. In response to the start up of the suction device, the rotation of the rotor 954 starts for crushing the paper. Then, the paper as the crushing raw material was fed from the slot, and a continuous crushing process was carried out for about one hour.

In Experiment 9, the paper was cut into a size of about 200 × 2000 mm, and the screen 953 of 0.5 [mm] in a mesh diameter was set in the rotary cutter mill 950. Similar to Experiment 8, upon the activation of the suction device, the rotation of the rotor 954 starts for crushing the paper. Then, the paper as the crushing raw material was fed from the slot, and a continuous crushing process was carried out for about one hour. The crushed product obtained through the mesh of the screen 953 was clearly a fine product compared to the crushed product obtained in Experiment 8.

The crushed products obtained in Experiments 8, 9 were mixed with water at a concentration of 4 [wt%], and the mixed product was put in the measuring cylinder. The mixed product was left for a while. After confirming that the crushed products were deposited in the bottom of the measuring cylinder, the measuring cylinder was shaken, so that the crushed products were preferably dispersed in the supernatant water similar to the crushed products obtained with the planetary ball mill. The respective fibers were locked at a predetermined size. However, the size of the fibers formed by the locking was a mesh diameter of the screen 953 or below, and a large cotton block was not formed. The aggregations of the fibers each of about several hundred [µm] were preferably dispersed in the water.

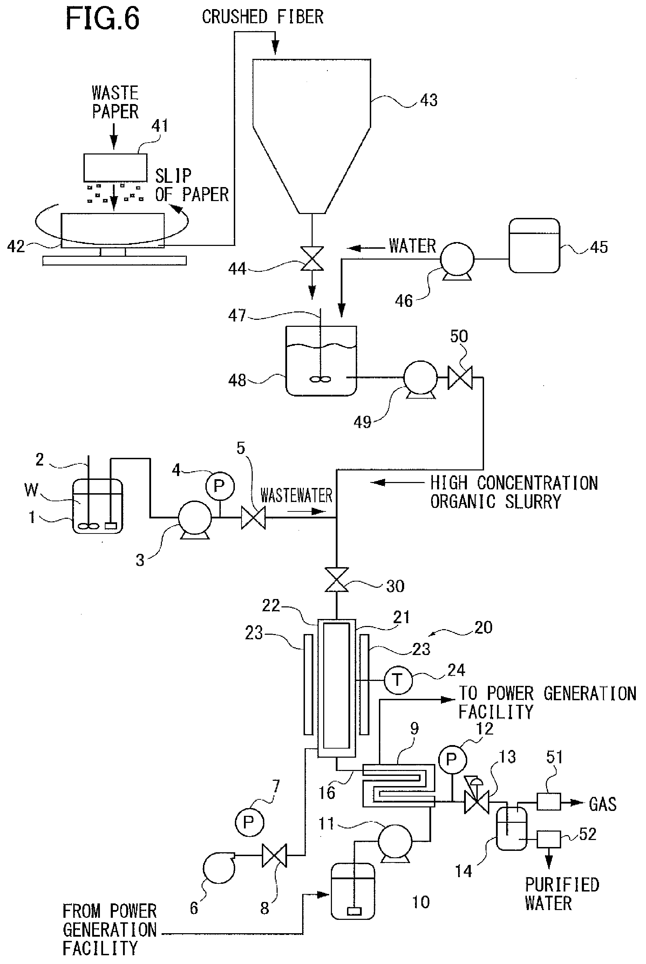

Next, a use of a purification system according to each embodiment will be described. At first, a fluid purification system according to First Embodiment, that is the present invention, will be described. In view of the results of the above Experiments 6, 7, in the fluid purification system according to First Embodiment, used paper or shredder residue is used as an organic solid waste of a raw material of high concentration organic slurry. The fluid purification system includes a planetary ball mill as a crusher. FIG. 6 is a schematic view illustrating the fluid purification system according to First Embodiment. The fluid purification system according to First Embodiment includes a raw water tank 1, raw water agitator 2, raw water supply pump 3, raw water pressure meter 4, raw water exit valve 5, oxidant pump 6, oxidant pressure meter 7, oxidant exit valve 8, heat exchanger 9, heat medium tank 10, heat exchanger pump 11, and exit pressure meter 12. The fluid purification system according to First Embodiment also includes a reaction exit valve 13, gas liquid separator 14, reaction tank 20, reaction tank thermometer 24, reaction tank entrance valve 30, shredder 41, planetary ball mill 42, paper powder hopper 43, paper powder input valve 44, water tank 45, water supply pump 46, and slurry agitator 47. The fluid purification system according to First Embodiment also includes a slurry tank 48, slurry pump 49, slurry exit valve 50, and not-shown controller.

The controller includes a power-feeding circuit made from a combination of an electric leakage breaker, magnet switch, thermal relay and the like. The number of power-feeding circuits corresponds to the number of drivers. The power source to each of the drivers is individually controlled to be tuned on or off by switching on or off the magnet switch of the power-feeding circuit with the control signals from a programmable sequencer.

Each of the raw water pressure meter 4, oxidant pressure meter 7, and exit pressure meter 12 outputs a voltage corresponding to the detected result of pressure. The reaction tank thermometer 24 outputs a voltage corresponding to the detected result of temperature. After the voltage output from each of the measuring devices is individually converted into digital data by a not-shown A/D convertor, the digital data is input to the programmable sequencer as sensing data. The programmable sequencer controls driving of various driving devices based on the sensing data.

Unpurified wastewater W of the purification target fluid containing an organic substance is retained in the raw water tank 1. The wastewater W is made of at least one of organic solvent wastewater, paper-making wastewater from a paper-making process, and toner-making wastewater from a toner-making process. The paper-making wastewater and the toner-making wastewater contain a persistent organic substance.

The raw water agitator 2 agitates the wastewater W retained in the raw water tank 1, so that suspended solids contained in the wastewater are uniformly dispersed so as to make uniform the organic substance concentration. The wastewater W in the raw water tank 1 is continuously pumped toward the reaction tank 20 by the raw water supply pump 3.

The raw water exit valve 5 has a role as a check valve. The raw water exit valve 5 allows the flow of the wastewater W pumped from the raw water supply pump 3 toward a preprocessor 100 while the raw water exit valve 5 blocks the reverse direction flow.

An operator puts used thermal paper as used paper in a shredder 41 to be shredded into fine strips. In addition, as the raw material of the high concentration organic slurry, when using the shredder residue as used paper, the shredder residue is set in the after-described planetary ball mill 42 without putting the shredder residue in the shredder 41. When using waste paper from the paper-making process, the waste paper is put in the shredder 41 similar to the used thermal paper as the raw material of the high concentration organic slurry. After an operator sets the shredder residue and the strips obtained with the shredder 41 in the planetary ball mill 42, and the shredder residue and the strips are crushed into paper powder, the paper powder is put in the paper powder hopper 43. An operator manually puts the used thermal paper in the shredder 41, sets the strips in the planetary ball mill 42, and sets the paper powder in the paper powder hopper 43. However, a continuous configuration is applied for the planetary ball mill 42 and the like, so that these can be automated. In particular, while the strips from the shredder 41 are roughly crushed with a crusher including a rotation blade, the obtained rough paper powder is continuously put in the planetary ball mill 42, and the obtained fine paper powder is continuously put in the paper powder hopper 43 from the planetary ball mill 42. A mill described in JP H07-171430A can be used as an example of the continuous planetary ball mill 42.

A steep angle taper is provided in the bottom of the paper powder hopper 43, and a paper powder input valve 44 is provided in a drain tube in the lowest portion. The controller quantitatively inputs the paper powder into a slurry tank 48 by closing and opening the paper powder input valve 44. In addition, when the paper powder easily stacks in the drain tube, a compressor which feeds air in the drain tube is provided, so that the stacking can be prevented by feeding air in the drain tube upon the driving of the compressor at the same time as the opening of the paper powder input valve 44.

The controller quantitatively supplies the water of the water tank 45 to the slurry tank 48 upon the driving of the water supply pump 46 while the controller inputs the paper powder in the slurry tank 48 by opening the paper powder input valve 44. The paper powder and water are therefore put in the slurry tank 48 at a predetermined ratio, so as to be agitated by the slurry agitator 47. The high concentration organic slurry S of 4 [wt%] or more can be thereby obtained. The fibers of the paper powder in the high concentration organic slurry S are crushed with the planetary ball mill 42 so as to be a length of about several tens of [µm]. Thus, the fibers are preferably dispersed in the water as liquid without agglutinating. The high concentration organic slurry S can be pumped by the slurry pump 49.

The high concentration organic slurry S agitated in the slurry tank 48 is continuously and quantitatively pumped toward the reaction tank 20 with the slurry pump 49. The slurry exit valve 50 has a role as a check valve. The slurry exit valve allows the flow of the high concentration organic slurry S pumped from the slurry pump 49 from the pump toward the reaction tank 20 while the slurry exit valve 50 blocks the flow in the revise direction.

A raw water-pumping tube connected to the raw water exit valve 5 and a slurry-pumping tube connected to the slurry exit valve 50 are joined together on the way. Namely, the wastewater W passing through the raw water exit valve 5 and the high concentration organic slurry S passing through the slurry exit valve 50 are joined together on the way, so that mixed slurry (W + S) is obtained.

As described above, the reaction tank 20 includes a double tube structure made of the outer tube 21 and the inner tube 22 disposed inside the outer tube 21.

The flow pressure of the wastewater W by the driving of the raw water supply pump 3 is detected by the raw water pressure meter 4 disposed in the upstream side of the raw water exit valve 5, and is input in the programmable sequencer of the controller as sensing data. The flow pressure of the wastewater W during the driving of the raw water supply pump 3 is substantially equal to the pressure in the inner tube 22. The programmable sequencer judges the pressure in the inner tube 22 based on the detection results of the pressure from the raw water pressure meter 4 during the driving of the raw water supply pump 3.

The oxidant pump 6 made of a compressor compresses air introduced as the oxidant to a pressure substantially equal to the flow pressure of the wastewater W to the reaction tank 20, and feeds the air to the reaction tank 20 through the oxidant exit valve 8. The oxidant exit valve 8 has a role as a check valve, and allows the flow of air from the oxidant pump 6 from the oxidant pump 6 to the reaction tank 20 while the oxidant exit valve 8 blocks the flow in the reverse direction.

After the air pumped in the reaction tank 20 enters the space between the outer tube 21 and the inner tube 22, the air flows near the entrance of the inner tube 22 in the longitudinal direction. Then, the air is mixed with the mixed slurry (W + S) fed in the inner tube 22, so that mixed fluid (W + S + A) is obtained.

The flow pressure of the air relative to the reaction tank 20 by the driving of the oxidant pump 6 is detected by the oxidant pressure meter 7 disposed in the upstream side of the oxidant exit valve 8, and is input in the programmable sequencer of the controller as sensing data. The flow pressure of the air during the driving of the oxidant pressure meter 7 is substantially equal to the pressure in the reaction tank 20. The programmable sequencer judges the pressure in the reaction tank 20 based on the detection result of the pressure from the oxidant pressure meter 7 during the driving of the oxidant pump 6.

The pumping amount of air by the driving of the oxidant pump 6 is determined based on the stoichiometric oxygen amount required for completely oxidizing the organic substance in the mixed slurry. More specifically, the oxygen amount required for completely oxidizing the organic substance is calculated based on the concentration of the organic substance in the wastewater W and the high concentration organic slurry such as COD (Chemical Oxygen Demand) of wastewater. The pumping amount of the air is set according to the results.

The air flow amount is set by an operator, but a programmable sequencer can be used in the following case, so as to carry out a process which automatically corrects the above-described control range based on the result of the property detected with a sensor. Namely, the programmable sequencer is used when the types of the organic substance contained in the wastewater W are stable, and the correlation between the properties such as turbidity, light transmission rate, electric conductivity, or specific gravity and the above-described amount of oxygen is relatively preferable.

It is possible to use any one of oxygen gas, ozone gas, and oxygenated water in addition to air, or a mixture of two or more of these. From the viewpoint of controlling the discharge of heat from the inner tube 22, it is preferable to use gas such as air, oxygen gas, or ozone gas. Gas has heat conductivity lower than that of liquid, so that it can be used as a heat insulating material by filling the space between the tubes with air.

The outer circumferential surface of the outer tube 21 is covered by a heater 23 which heats the mixed fluid in the inner tube 22 and the air between the outer tube 21 and the inner tube 22. In the inner tube 22, an organic substance or inorganic compound in the mixture fluid is oxidized and decomposed by pressing and heating the mixed fluid (W + S + A). In this case, the fibers (for example, cellulose) in the high concentration organic slurry S generate heat in accordance with the oxidization and decomposition, so as to increase the temperature of the mixed fluid. The heating amount by the heater 23 is thereby reduced. The mixed fluid purified by the oxidization and decomposition of the organic substance in the inner tube 22 enters the purified fluid delivery tube 16.

The water in the purified mixed fluid is cooled in the purified fluid delivery tube 16, and is changed from the supercritical condition or overheated steam condition to the liquid purified water. On the other hand, the oxygen or the nitrogen in the mixed fluid is changed from the supercritical condition or overheated steam condition to a gas condition. The composition of the gas separated by the gas-liquid separator 14 is detected by a gas chromatograph 51. When an undecomposed material is detected, a programmable sequencer which receives the output signal from the gas chromatograph 51 raises an alarm. The gas passing through the gas chromatograph 51 is discharged in the air.

On the other hand, TOC (Total Organic Carbon) concentration of the purified water separated by the gas-liquid separator 14 is detected by a TOC analyzer 52. When the total organic carbon at a concentration over a threshold is detected by the TOC analyzer 52, the programmable sequencer, which receives the output signal from the TOC analyzer 52, raises an alarm. The purified water passing through the TOC analyzer 52 is retained in the purified water tank.

The purified water is water in which a low-molecular-weight organic substance, which cannot be removed by a biotreatment with active sludge, is almost-totally oxidized and decomposed; thus, it hardly contains a suspended substance or organic substance. The purified water contains only a small amount of inorganic substances which cannot be oxidized. It can be reused as industrial water as it is according to an intended purpose. It can be diverted to LSI cleaning liquid or the like by applying a filtering process with an ultrafilter. The gas separated by the gas-liquid separator 14 includes carbon dioxide and nitrogen gas as the main components.

A heat exchanger 9 is attached to the outer surface of the purified fluid delivery tube 16. The main body of the heat exchanger 9 includes an outer tube covering the outer surface of the purified fluid delivery pipe 16, and fills the space between the outer tube and the outer surface of the purified fluid delivery tube 16 with heat exchange fluid such as water, so as to carry out heat exchange between the outer surface of the purified fluid delivery pipe 16 and the heat exchange fluid. During the driving of the reaction tank 20, very high temperature liquid flows in the purified fluid delivery tube 16, so that the heat is moved in the heat exchange fluid in the heat exchanger 9 from the purified fluid delivery tube 16, and the heat exchange fluid is thereby heated. The delivery direction of the heat exchange fluid in the heat exchanger 9 is a direction opposite to the delivery direction of the liquid in the purified fluid delivery tube 16, so as to carry out countercurrent heat exchange. Namely, the heat exchange fluid is fed toward the reaction tank 20 from the reaction exit valve 13. This is carried out by the heat exchange pump 11 which feeds the heat exchange fluid in the heat medium tank 10 to the heat exchanger 9 while sucking the heat exchange fluid.

The heat exchange fluid heated by passing through the heat exchanger 9 is fed to a not-shown power facility, and contributes to the driving of a turbine for generating power. A not-shown exit thermometer which detects the temperature of the purified fluid delivery tube 16 or the temperature of the liquid in the purified fluid delivery tube 16 is provided near the reaction exit valve 13 in the purified fluid delivery tube 16. The programmable sequencer of the controller controls the driving of the heat exchange pump 11 such that the detection result by the exit thermometer is maintained in a predetermined value range. In particular, when the detection result by the exit thermometer achieves a predetermined upper limit temperature, the driving amount of the heat exchange pump 11 is increased so as to increase the supply amount of the heat exchange fluid to the heat exchanger 9, so that the cooling operation with the heat exchanger 9 is improved. In contrast, when the detection result by the exit thermometer achieves a predetermined lower limit temperature, the driving amount of the heat exchange pump 11 is decreased so as to decrease the supply amount of the heat exchange fluid to the heat exchanger 9, so that the cooling operation with the heat exchanger 9 is lowered. According to the above configuration, the temperature of the liquid in the purified fluid delivery tube 16 can be maintained in a predetermined range by appropriately adjusting the heat exchange amount. In addition, the heat exchanger 9 can be attached to the outer tube 21 of the reaction tank 20 instead of attaching the heat exchanger 9 to the purified fluid delivery tube 16.

The slurry pump 49, which pumps the high concentration organic slurry S to the reaction tank 20 (flow tube 26) in addition to the wastewater W, is provided in the fluid purification system according to First Embodiment. However, the following configuration can be provided instead of the slurry pump 49. Namely, a mixing pump which mixes the wastewater W and the high concentration organic slurry S, and pumps the mixture to the reaction tank 20. More specifically, a slurry transfer pump is provided instead of the slurry pump 49, so as to transfer the high concentration organic slurry S in the slurry tank 48 into the raw water tank 1 by the slurry transfer pump. Then, the wastewater W and the high concentration organic slurry S are mixed at a predetermined ratio in the raw water tank 1 so as to obtain the mixed slurry. The mixed slurry is pumped to the reaction tank 20 by the raw water supply pump 3. According to this configuration, the slurry agitator 47, slurry tank 48, slurry transfer pump, raw water tank 1, raw water agitator 2, raw water supply pump 3 and the like function as the mixing pump.

The reaction tank thermometer 24 indirectly detects the temperature of the mixed fluid in the reaction tank 20 by detecting the temperature of the reaction tank 20, or directly detects the temperature of the mixed fluid in the reaction tank 20. The programmable sequencer obtains the temperature (hereinafter referred to as a reaction temperature) of the mixed fluid in the reaction tank 20 based on the detection result with the reaction tank thermometer 24. When a reaction temperature is higher than a predetermined upper limit temperature, the driving amount of the raw water supply pump 3 per unit time is increased while the driving amount of the slurry pump 49 per unit time is decreased. Therefore, by decreasing the ratio of the mixture of the high concentration organic slurry S to the wastewater W, the organic substance pumping amount per unit time relative to the reaction tank 20 is lowered, so that the reaction temperature is lowered to be lower than the upper limit temperature. In contrast, when the reaction temperature is lower than a predetermined lower limit temperature, the driving amount of the raw water supply pump 3 per unit time is decreased while the driving amount of the slurry pump 49 per unit time is increased. Therefore, by increasing the ratio of the mixture of the high concentration organic slurry S relative to the wastewater W, the organic substance pumping amount per unit time relative to the reaction tank 20 is increased, so that the reaction temperature is increased to be higher than the lower limit temperature. The programmable sequencer therefore adjusts the input amount of the organic substance so as to maintain the reaction temperature within the range of the lower limit temperature or more and the upper limit temperature or below.

Next, the fluid purification system according to Second Embodiment, which does not constitute the present invention, will be described. In view of the results of the above Experiments 8, 9, used paper or shredder residue is used as organic solid waste as a raw material of the high concentration organic slurry in the fluid purification system according to Second Embodiment. The fluid purification system according to Second Embodiment includes configurations similar to those in the fluid purification system according to First Embodiment except for the following points.

The fluid purification system according to Second Embodiment includes a rotary cutter mill instead of the planetary ball mill 42 as a crusher. The crusher is disposed on the paper powder hopper 43, and the crushed product of the paper discharged from the rotary cutter mill 950 falls in the paper powder hopper 43 by its own weight. Three screens 953 each having a different diameter such as ϕ 1, ϕ 2, ϕ 3 (ϕ 1 > ϕ 2 > ϕ 3) [µm] in a mesh diameter, which are employed in the rotary cutter mill 950, are used. These screens 953 are built up at predetermined intervals so as to locate the screens 953 near the rotor 954 in order from the large mesh diameter. A supporter which supports the screen group made of the three screens 953 is vibrated by a vibrator. The crushed product caught by each of the screens 953 is recovered from the end portion on the screen surface by the movement on the screen surface along the vibration, and is retransferred in the rotary cutter mill 950.

According to the above configurations, the crushed paper products are continuously generated, so as to be used as the raw material of the high concentration organic slurry.

Next, a fluid purification system according to Third Embodiment (part of the invention) will be described. The fluid purification system according to Third Embodiment includes configurations similar to those in the fluid purification system according to First Embodiment except for the following points.

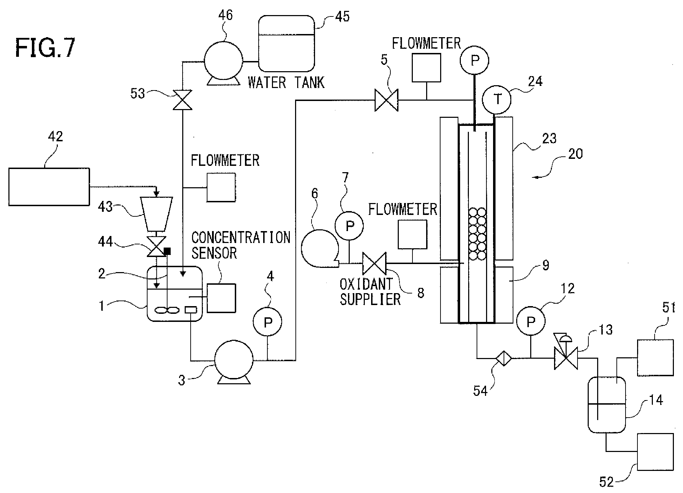

FIG. 7 is a schematic view illustrating the fluid purification system according to Third Embodiment. The fluid purification system according to Third Embodiment includes a raw water tank 1, raw water agitator 2, raw water supply pump 3, raw water pressure meter 4, raw water exit valve 5, oxidant pump 6, oxidant pressure meter 7, oxidant exit valve 8, heat exchanger 9, thermal medium tank 10, heat exchange pump 11, and exit pressure meter 12. The fluid purification system according to Third Embodiment also includes a reaction exit valve 13, gas-liquid separator 14, reaction tank 20, reaction tank thermometer 24, reaction tank input valve 30, shredder 41, planetary ball mill 42, paper powder hopper 43, paper powder input valve 44, water tank 45, and water supply pump 46. The fluid purification system according to Third Embodiment also includes a filter 54 and a not-shown controller.

In the fluid purification system according to Third Embodiment, the crushed products of the paper obtained by the planetary ball mill 42 (or rotary cutter mill) are directly put in the raw water tank 1 without disposing a slurry tank (slurry tank 48 in First Embodiment). More specifically, the crushed products are directly put in the raw water tank 1 without putting the crushed products of the paper in the slurry tank (48) with the paper powder input valve (44) being opened as in First Embodiment. The water in the water tank 45 is supplied to the slurry tank (48) by driving the water supply pump 46 in the fluid purification system according to First Embodiment. However, the fluid purification system according to Third Embodiment has the following configuration. Namely, the water in the water tank 45 is supplied to the raw water tank 1. The crushed products of the paper and the water are mixed in the raw water tank 1 at a predetermined ratio, and the obtained mixed slurry is agitated by the raw water agitator 2. With this configuration, high concentration mixed slurry can be obtained compared to the mixture of the wastewater W and the high concentration organic slurry S, and the mixed slurry can be pumped to the reaction tank 20 by the raw water supply pump 3.

The programmable sequencer controls the temperature of the mixed fluid in the reaction tank 20 as follows based on the detection result (detection result of reaction temperature) by the reaction tank thermometer 24. Namely, when the detection result of the reaction temperature is higher than a predetermined upper limit temperature, the flow volume of the water supply pump 46 is increased or the paper input valve 44 is closed. The amount of the crushed paper products to be put into the raw water tank 1 is thereby decreased, and the concentration of the mixed slurry of the wastewater and the paper powder is decreased, so that the reaction temperature is lowered to be lower than the upper limit temperature. In contrast, when the detection result of the reaction temperature is lower than a predetermined lower limit temperature, the flow volume of the water supply pump 46 is decreased (including stop) or the opening degree of the input valve 44 is increased. The amount of the crushed paper products to be put into the raw water tank 1 is thereby increased, and the concentration of the mixed slurry of the wastewater and the paper powder is increased, so that the reaction temperature is increased to be higher than the lower limit temperature. Accordingly, the reaction temperature is controlled in a predetermined range by adjusting the organic substance concentration of the mixed slurry in the raw water tank 1 according to the detection result of the reaction temperature. The reaction temperature can be thereby maintained in a predetermined range with high accuracy, so that the stability of the purification can be improved. Even when the concentration of the wastewater is changed, the reaction temperature can be easily maintained in a predetermined range by adjusting the organic substance concentration of the high concentration organic slurry. Moreover, the high concentration organic slurry is obtained from the organic solid waste, so that the costs can be lowered compared to general auxiliary fuel.

In each embodiment, the paper is used as the raw material of the high concentration organic slurry. Fibers or thin materials such as a plastic film, plastic pellet, cloth, rubber, wood waste, or kenaf can be used as the raw material. These can be crushed into an appropriate size by the planetary ball mill or the rotary cutter, so that such organic solid wastes can be used as the raw material of the high concentration organic slurry.

The above description is one example, and the present invention has the following effects according to the following aspects.

### [Aspect A]

A fluid purification system includes a reaction tank (for example, reaction tank 20) which purifies a purification target fluid (for example, wastewater W) by decomposing an organic substance in a purification target fluid with an oxidation reaction while heating and pressurizing a mixed fluid of the purification target fluid and an oxidant (for example, air A); a crusher (planetary ball mill 42) which crushes an organic solid waste ( waste thermal paper) so as to obtain an organic crushed product (for example, paper powder); a mixer (for example, slurry agitator 47, slurry tank 48, water tank 45, water supply pump 46) which mixes the organic crushed product and liquid (for example, water) so as to obtain high concentration organic slurry; and a mixing pump which mixes the purification target fluid with the high concentration organic slurry, so as to be pumped to the reaction tank or a slurry pump (for example, slurry pump 49) which pumps the high concentration organic slurry to the reaction tank separately from the purification target fluid.

### [Aspect B]

In the above aspect A, the crusher has a configuration which rotates a container housing a sphere and an organic solid waste while revolving the container, so as to press the sphere toward an inside wall of the container by a centrifugal force of the revolution, and crushes the organic solid waste between the sphere and the inner wall by the rotation of the container. With this configuration, even if the waste paper is used as the organic solid crushed product, high concentration organic slurry which can be pumped can be obtained by crushing the fibers of waste paper.

### [Aspect C]

In the above aspect B, a planetary ball mill (for example, planetary ball mill 42) is used as the crusher. With this configuration, a commercial planetary ball mill is used as the crusher, so that high concentration organic slurry having paper as a raw material, which can be pumped, can be obtained with a low-cost configuration.

### [Aspect D]

In the above aspect B or C, waste paper is used as the organic solid waste. With this configuration, the waste paper can be effectively used as the heat generation energy in the reaction tank.

### [Aspect E]

In the above aspect D, waste thermal paper is used as the waste paper. With this configuration, the thermal paper, which is conventionally burned up, can be effectively used as the heat generation energy in the reaction tank.

### [Aspect F]

In the above aspect D or E, the fluid purification system further includes a shredder which shreds the waste paper, and strips shredded by the shredder are supplied to the crusher. With this configuration, the load of the crusher can be reduced by supplying the paper shredded by the shredder to the crusher, compared to the case in which the paper is supplied without shredding.

### [Aspect G]

In the above aspect F, the mixer is configured to mix liquid (for example, water) and paper powder crushed by the crusher, so as to obtain a concentration of 4-15 [wt%] of the paper powder in liquid. With this configuration, high concentration organic slurry, which can increase a temperature in the reaction tank to a predetermined temperature only by the heat generation from the oxidative decomposition of the organic substance in the high concentration organic slurry, and the organic substance in the purification target fluid during the stable driving period, can be obtained.

### [Aspect H]

In any one of the above aspects A to G, the fluid purification system further includes a temperature detector (for example, reaction tank thermometer 24) which detects a temperature of the reaction tank or a temperature of the mixed fluid in the reaction tank; and an oxidant pump (for example, oxidant pump 6) which pumps oxidant to the reaction tank; and a controller which controls a mixture ratio of the high concentration organic slurry to a purification target fluid or a pumping speed of the high concentration organic slurry by the slurry pump based on the detection result by the temperature detector. With this configuration, the temperature in the reaction tank can be controlled to be in a predetermined range by adjusting the flow amount of the high concentration organic slurry per unit time relative to the reaction tank.

### [Aspect I]

In any one of the above aspects A to G, the fluid purification system further includes a temperature detector which detects a temperature of the reaction tank or a temperature of the mixed fluid in the reaction tank; an oxidant pump which pumps oxidant to the reaction tank; and a controller which controls an organic substance concentration of a mixture of the high concentration organic slurry and the purification target fluid based on the detection result by the temperature detector. With this configuration, the temperature in the reaction tank can be controlled to be in a predetermined range by adjusting the organic substance concentration of the mixture of the purification target fluid and the high concentration organic slurry.

According to the embodiments of the present invention, the high concentration organic slurry is oxidatively decomposed in the reaction tank so as to generate heat, so that the oxidant and the purification target fluid in the reaction tank are heated. By heating the oxidant and the purification target fluid in the reaction tank with the heat generation of the high concentration organic slurry having the organic solid waste as a raw material, the heating amount with a heater can be reduced compared to a case which does not use the high concentration organic slurry. For this reason, the running costs for heating the mixed fluid can be reduced.

## Claims

1. Use of a fluid purification system, the fluid purification system, comprising:
a reaction tank (20) which is configured to purify a purification target fluid by decomposing an organic substance in a purification target fluid (W) with an oxidation reaction while heating and pressurizing a mixed fluid of the purification target fluid and an oxidant (A), wherein waste paper is used as an organic solid waste;
a mixer;
a mixing pump which is configured to mix the purification target fluid with a high concentration organic slurry, so as to be pumped to the reaction tank (20) or a slurry pump (49) which pumps the high concentration organic slurry to the reaction tank (20) separately from the purification target fluid,
a crusher (42) which is configured to crush the organic solid waste so as to obtain an organic crushed product;
a shredder (41) which is configured to shred the waste paper, wherein
a strips shredded by the shredder (41) are supplied to the crusher (42),
wherein the mixer is configured to mix the organic crushed product and liquid so as to obtain high concentration organic slurry, **characterized in that**
waste thermal paper is used as the waste paper, wherein
a planetary ball mill is used as the crusher (42) for crushing the waste thermal paper.

2. The use according to Claim 1, wherein
the crusher (42) rotates a container housing a sphere and an organic solid waste while revolving the container, so as to press the sphere toward an inside wall of the container by a centrifugal force of the revolution, and crushes the organic solid waste between the sphere and the inner wall by the rotation of the container.

3. The use according to Claim 1, wherein
the mixer mixes liquid and paper powder crushed by the crusher (42), so as to obtain a concentration of 4-15 [wt%] of the paper powder in liquid.

4. The use according to any one of Claims 1 to 3, further comprising:
a temperature detector (24) which detects a temperature of the reaction tank (20) or a temperature of the mixed fluid in the reaction tank (20); and
an oxidant pump (6) which pumps oxidant to the reaction tank (20); and
a controller which controls a mixture ratio of the high concentration organic slurry to a purification target fluid or a pumping speed of the high concentration organic slurry by the slurry pump (49) based on the detection result by the temperature detector (24).

5. The use according to any one of Claims 1 to 3, further comprising:
a temperature detector (24) which detects a temperature of the reaction tank (20) or a temperature of the mixed fluid in the reaction tank (20);
an oxidant pump (6) which pumps oxidant to the reaction tank (20); and
a controller which controls an organic substance concentration of a mixture of the high concentration organic slurry and the purification target fluid based on the detection result by the temperature detector (24).

## Patentansprüche

1. Verwendung eines Fluidreinigungssystems, wobei das Fluidreinigungssystem umfasst:
einen Reaktionstank (20), der dazu ausgelegt ist, ein Reinigungszielfluid durch Zersetzen einer organischen Substanz in einem Reinigungszielfluid (W) mit einer Oxidationsreaktion zu reinigen, während ein gemischtes Fluid aus dem Reinigungszielfluid und einem Oxidationsmittel (A) erhitzt und mit Druck beaufschlagt wird, wobei Papierabfälle als organische Festabfälle verwendet werden;
einen Mischer;
eine Mischpumpe, die dazu ausgelegt ist, das Reinigungszielfluid mit einem hochkonzentrierten organischen Schlamm so zu mischen, dass sie zu dem Reaktionstank (20) gepumpt werden, oder eine Schlammpumpe (49), die den hochkonzentrierten organischen Schlamm getrennt von dem Reinigungszielfluid zu dem Reaktionstank (20) pumpt,
einen Zerkleinerer (42), der dazu ausgelegt ist, die organischen Festabfälle zu zerkleinern, um ein organisches zerkleinertes Produkt zu erhalten;
einen Schredder (41), der dazu ausgelegt ist, die Papierabfälle zu schreddern, wobei Streifen, die von dem Schredder (41) geschreddert werden, dem Zerkleinerer (42) zugeführt werden,
wobei der Mischer dazu ausgelegt ist, das organische zerkleinerte Produkt und Flüssigkeit zu mischen, um hochkonzentrierten organischen Schlamm zu erhalten, **dadurch gekennzeichnet, dass**
Thermopapierabfälle als Papierabfälle verwendet werden, wobei
eine Planetenkugelmühle als Zerkleinerer (42) zum Zerkleinern der Thermopapierabfälle verwendet wird.

2. Verwendung nach Anspruch 1, wobei
der Zerkleinerer (42) einen Behälter, der eine Kugel beherbergt, und organische Festabfälle während der Umdrehung des Behälters dreht, um die Kugel durch eine Zentrifugalkraft der Umdrehung in Richtung einer Innenwand des Behälters zu drücken, und die organischen Festabfälle zwischen der Kugel und der Innenwand durch die Drehung des Behälters zerkleinert.

3. Verwendung nach Anspruch 1, wobei
der Mischer Flüssigkeit und Papierpulver, das von dem Zerkleinerer (42) zerkleinert ist, mischt, um eine Konzentration von 4-15 Gew.-% des Papierpulvers in der Flüssigkeit zu erhalten.

4. Verwendung nach einem der Ansprüche 1 bis 3, die ferner umfasst:
einen Temperaturdetektor (24), der eine Temperatur des Reaktionstanks (20) oder eine Temperatur des gemischten Fluids in dem Reaktionstank (20) detektiert; und
eine Oxidationsmittelpumpe (6), die Oxidationsmittel zu dem Reaktionstank (20) pumpt; und
einen Controller, der ein Mischungsverhältnis des hochkonzentrierten organischen Schlamms zu einem Reinigungszielfluid oder eine Pumpgeschwindigkeit des hochkonzentrierten organischen Schlamms durch die Schlammpumpe (49) basierend auf dem Detektionsergebnis von dem Temperaturdetektor (24) steuert.

5. Verwendung nach einem der Ansprüche 1 bis 3, die ferner umfasst:
einen Temperaturdetektor (24), der eine Temperatur des Reaktionstanks (20) oder eine Temperatur des gemischten Fluids in dem Reaktionstank (20) detektiert; und
eine Oxidationsmittelpumpe (6), die Oxidationsmittel zu dem Reaktionstank (20) pumpt; und
einen Controller, der eine Konzentration von organischer Substanz in einer Mischung des hochkonzentrierten organischen Schlamms und des Reinigungszielfluids basierend auf dem Detektionsergebnis von dem Temperaturdetektor (24) steuert.

## Revendications

1. Utilisation d'un système de purification de fluide, le système de purification de fluide comprenant :
un réservoir de réaction (20) qui est configuré pour purifier un fluide de purification cible en décomposant une substance organique en un fluide de purification cible (W) avec une réaction d'oxydation tout en chauffant et en mettant sous pression un fluide mélangé composé de l'agent de purification cible et d'un oxydant (A), dans lequel des rebuts de papier sont utilisés en tant que déchet solide organique ;
un mélangeur ;
une pompe de mélange qui est configurée pour mélanger le fluide de purification cible avec une pâte liquide organique à haute concentration, afin d'être pompé vers le réservoir de réaction (20) ou une pompe pour liquides chargés (49) qui pompe la pâte liquide organique à haute concentration vers le réservoir de réaction (20) séparément du fluide de purification cible ;
un broyeur (42) qui est configuré pour broyer le déchet solide organique afin d'obtenir un produit broyé organique ;
une déchiqueteuse (41) qui est configurée pour déchiqueter les rebuts de papier, dans lequel :
des bandes déchiquetées par la déchiqueteuse (41) sont amenées au broyeur (42),
dans lequel le mélangeur est configuré pour mélanger le produit broyé organique et le liquide afin d'obtenir une pâte liquide organique à haute concentration, **caractérisée en ce que** :
on utilise des rebuts de papier thermique en tant que rebuts de papier, dans lequel :
un broyeur planétaire à boulets est utilisé en tant que broyeur (42) pour broyer les rebuts de papier thermique.

2. Utilisation selon la revendication 1, dans lequel :
le broyeur (42) fait tourner un récipient contenant une sphère et un déchet solide organique tout en faisant tourner le récipient, afin de comprimer la sphère vers une paroi interne du récipient par une force centrifuge de révolution, et broie le déchet solide organique entre la sphère et la paroi interne par la rotation du récipient.

3. Utilisation selon la revendication 1, dans lequel :
le mélangeur mélange le liquide et le papier en poudre broyé par le broyeur (42), afin d'obtenir une concentration de 4-15 [% en poids] du papier en poudre en liquide.

4. Utilisation selon l'une quelconque des revendications 1 à 3, comprenant en outre :
un détecteur de température (24) qui détecte une température du réservoir de réaction (20) ou une température du fluide mélangé dans le réservoir de réaction (20) ; et
une pompe d'oxydant (6) qui pompe l'oxydant vers le réservoir de réaction (20) ; et
un organe commande qui commande un rapport de mélange de la pâte liquide organique à haute concentration sur un filuide de purification cible ou une vitesse de pompage de la pâte liquide organique à haute concentration par la pompe pour liquides chargés (49) en fonction du résultat de détection obtenu par le détecteur de température (24).

5. Utilisation selon l'une quelconque des revendications 1 à 3, comprenant en outre :
un détecteur de température (24) qui détecte une température du réservoir de réaction (20) ou une température du fluide mélangé dans le réservoir de réaction (20) ;
une pompe d'oxydant (6) qui pompe l'oxydant vers le réservoir de réaction (20) ; et
un organe de commande qui commande une concentration de substance organique d'un mélange composé de la pâte liquide organique à haute concentration et du fluide de purification cible, en fonction du résultat de détection obtenu par le détecteur de température (24).
